# EUROPEAN PATENT SPECIFICATION

(11) **EP 2 542 845 B1**
(45) Date of publication and mention of the grant of the patent: **03.06.2015**
(21) Application number: 11708196.8
(22) Date of filing: 04.03.2011
(51) Int. Cl.: F26B 3/12, F26B 21/08

(54) **A SPRAY DRYING APPARATUS**
SPRÜHTROCKNER
APPAREIL DE SÉCHAGE PAR PULVÉRISATION

(30) Priority: 05.03.2010 DK 201000173
(43) Date of publication of application: 09.01.2013
(73) Proprietor: Cotes A/S, 4200 Slagelse (DK)
(72) Inventor: VALENTIN, Lars, DK-4700 Næstved (DK); CLAUSEN, Jannik, Reiner, DK-4700 Næstved (DK); OLESEN, Søren, Rønnow, DK-4230 Skælskør (DK)
(74) Representative: Nordic Patent Service A/S
(86) International application number: PCT/EP2011/001072
(87) International publication number: WO 2011/107284

(56) References cited:
- EP-A1- 1 508 359
- EP-A1- 1 912 033
- DE-A1- 2 158 675
- US-A- 5 188 645
- US-A- 5 727 394
- US-B1- 6 199 392

## Description

The present invention relates to a spray drying apparatus according to the preamble of claim 1.

Spray dryers are used for drying a feed in form of solids and a solvent as for instance water by spraying the feed in a spray drying chamber in which the feed is brought in contact with a normally hot process air introduced simultaneously thereby causing the solvent to evaporate. The evaporated solvent will be transported by the process air and leave the spray drying chamber at a process air outlet and the solids will be withdrawn at the lower most portion of the spray drying chamber for further processing and drying in most often a fluid bed apparatus. Normally special filter arrangements will be utilized for the arrest of particles escaping the spray drying chamber with the process air leaving the chamber.

In industry such spray dryers are often large scale plants installed for the production of e.g. instant coffee or milk powder in a constant process flow. Such spray dryers may be operating with process air volumes of up to 100.000 kg per hour and outputs of 3 - 4 ton of solids per hour and will thus entail large energy consumption in terms of heating energy for the process air.

Within the field of spray drying substantial improvements have been developed and implemented in order to increase the efficiency of the spray drying process to raise the output in terms of kilos solids per hour produced.

From Spray drying Hand Book, 5th ed., Chapter 10, by K. Masters it is thought that a high relative humidity may necessitate a reduction of the inlet air temperature and thus a reduction of the capacity of the spray drying apparatus (page 120, 121).

US 4,475,295 discloses an installation for dehumidification of a gaseous drying medium using an adsorbent and with regeneration of the adsorbent. By use of the installation drying of a partial stream of the drying medium each with different moisture content can be obtained. In the reference the use of a battery of heat exchangers with alternating functions is described.

DE 2158675 A1 discloses a plant and a method for the purification of a drying gas and a pulp, the process air of said plant circulating in a closed loop construction for process air treatment, wherein process air within the closed loop construction is preheated by the dehumidifier regeneration air.

In order to compensate for changes in the moisture content of the process air it has therefore been good practice to reduce the feed rate in view of the reduction in spray drying capacity to thereby balance evaporating capacity and actual feed rate. This, however, has the undesirable side effects that the spray drying apparatus may be operating in an ineffective manner.

Various improvements in terms of increasing the efficiency of the spray drying process relate to controlling the operation of the spray drying apparatus. And as such a normal practice of control is keeping a constant temperature and a constant relative humidity of the process air discharged from the spray chamber outlet to obtain a product of substantially constant quality.

Such a spray drying apparatus is described in WO 2008/077399 describing a method and an apparatus for keeping the outlet temperature and the relative humidity of the process air outlet air at a constant level thereby allowing constant residual moisture content of the dried product. This is obtained by adjusting the process air flow and process air temperature in relation to the moisture content hereby obtaining that the product is being produced under constant conditions.

It is, however, a drawback of the above process that it requires an adjustment of the inlet air temperature and the air flow of the process in order to entail a constant evaporating capacity of the spray drying chamber. In terms of energy consumption this method is highly dependent on the operation set point of the specific process and will vary with any changes in moisture content of the process air used for the drying process and as such requires that the spray drying apparatus may operate within wide ranges of air volumes which in turn sets great requirements for the equipment such as process air fan, ducting and moreover requires a high energy consumption for the heating of the process air.

It is the object of the present invention to provide a spray drying apparatus that overcome the problems with the prior art.

This is obtained by the present invention in that the spray drying apparatus comprises heat exchanging means configured for exchanging heat energy from the process air volume discharged at the process air discharge to regeneration energy for the heating of the regeneration air volume.

In an embodiment the spray drying apparatus further comprises a controller configured for determining a moisture content based on readings from moisture content measuring means; and a connection for forwarding information to a means for regulating the regeneration energy on basis of a comparison of an actual reading of the moisture content and moisture set point to obtain a measured value of the moisture.

Hereby a significant increase in the production capacity of the spray drying apparatus has been obtained as the process air volume is able to absorb an increased quantity of water as the enthalpy working line applicable for the actual drying process has been extended by reducing the moisture content and raising the process air temperature use of the energy which already is available considered waste and thus obtaining a process which is makes it possible to increase the output per hour and still reduce the operation cost.

Other preferred embodiments of the invention appear from the depending claims.

The invention will be described in detail with reference to the schematic drawings in the following, where
- Fig. 1 show a schematic diagram of a spray drying apparatus according to the invention,
- Fig 2a, in a perspective view, shows details of a rotor section with a rotor, for a spray drying apparatus according to the invention,
- Fig. 2b shows a sectional side view of the rotor section shown in Fig. 2a, and
- Fig. 2c shows a front view of the rotor section in Fig. 2a.

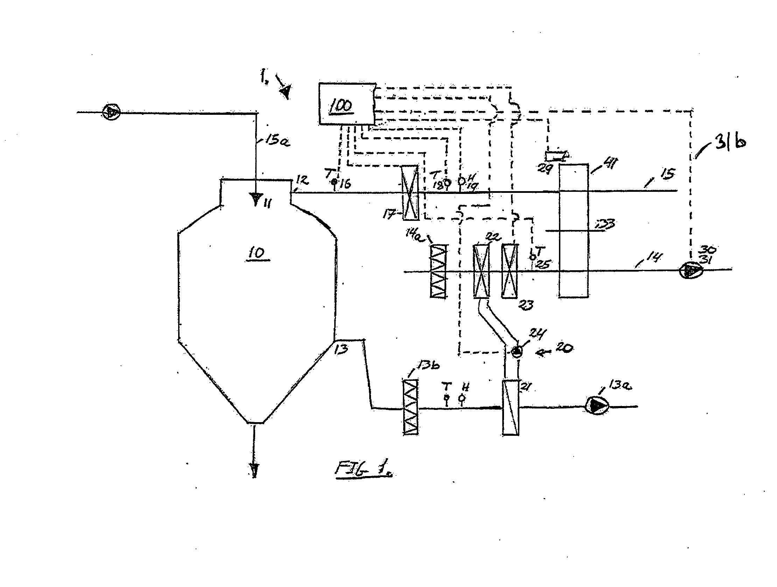

In fig. 1 a schematic diagram of the spray drying apparatus comprising a spray dryer chamber 10 with a feed inlet device 11, a process air inlet 12 and a process air discharge 13 connected to adequate filters 13b and a process air fan 13a configured for the transport of the process air is shown. Furthermore, a feed line 15a and a feed line system (not shown) which is known in the art will be connected to the feed inlet device 11 and hence not described in further details. The feed inlet device comprise an atomizer (not shown) of a kind which is known in the art as e.g. a nozzle or a rotary atomizer (not shown) for spraying the feed into the spray dryer chamber 10.

A process air inlet duct 15 is connected to the process air inlet 12 and a process air heater 17 is configured for heating the process air to a process air inlet temperature prior to entering the spray dryer chamber. The process air heater 17 is in the present form a steam heater operating with saturated steam. It will, however, be appreciated that any heater suitable in view of the actual installation may apply.

A process air temperature measuring means 16 which normally will be an electronic temperature sensor 16 is installed in the process air inlet duct 15 and connected to a controller 100.

Connected to the process air inlet duct 15 between a filter arrangement (not shown) and the process air heater 17, an adsorption dehumidification device for dehumidification of the process air is installed.

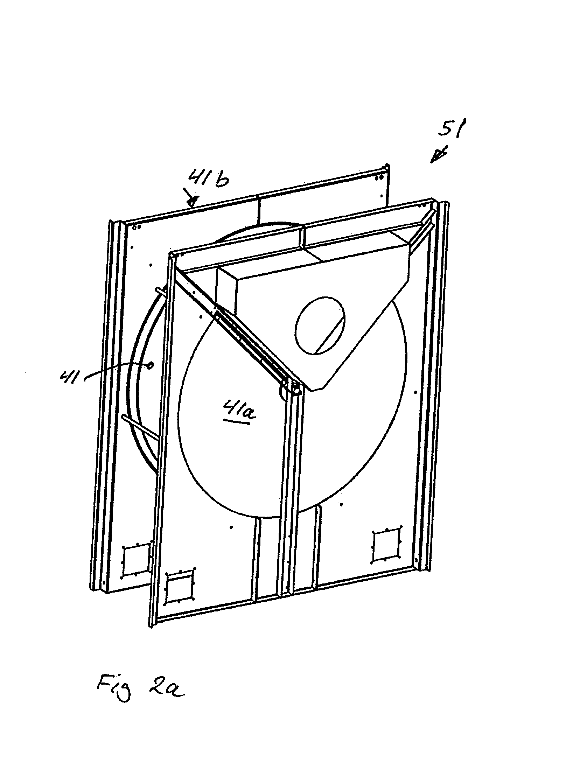

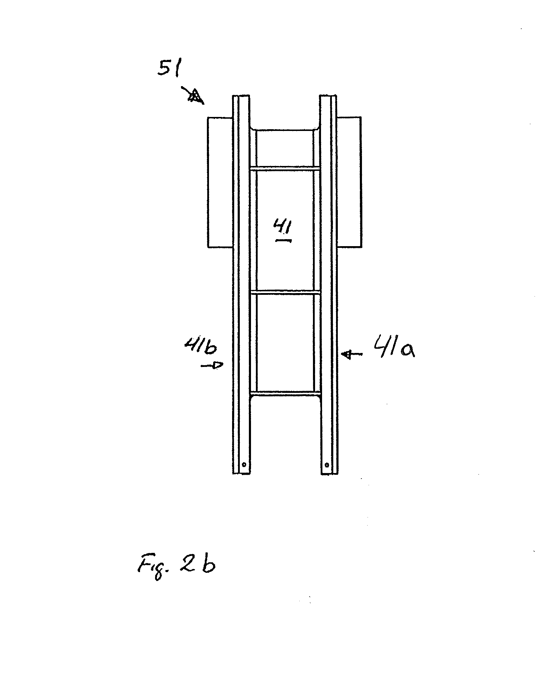

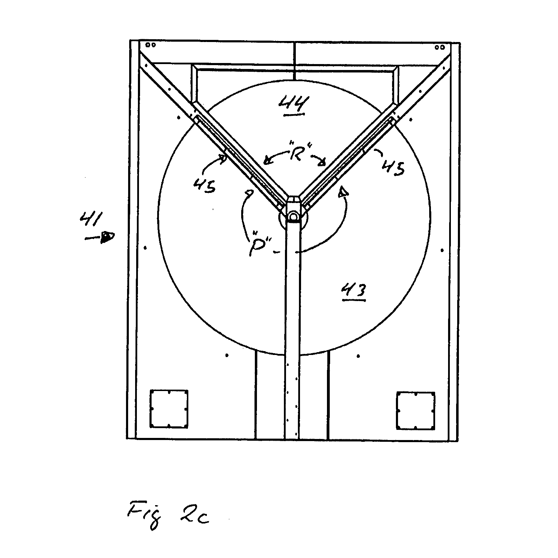

With reference made to Figures 2a, 2b and 2c the function of the dehumidification device, also referred to as a dehumidifier, will be described with reference to the sectional views of its rotor section 51 in Figs. 2b and 2c. The dehumidifier comprises an adsorption source in form of a cylindrical adsorption rotor 41 with flutes extending from a first cylinder end surface 41a to a second cylinder end surface 41b, and impregnated with an adsorption agent which in most cases will be in form of a silica gel or lithium chloride and as such remove water from the process air volume which is brought in contact here with. "Adsorption" is also referred to as "sorption".

The rotor 41 is mounted on centrally mounted bearings allowing a rotation of the rotor 41. A drive means comprising a drive motor 29 is adapted for rotating the rotor 41 about a centre axis 33 at a given speed suitable for the dehumidification process. Normally the rotational speed of the rotor 41 is fixed, however, in some particular cases it may be required of to adjust the rotational speed in order to optimize the dehumidification performance.

The dehumidifier comprise a process air section 43 and a regeneration air section 44 which will be divided from each other by gaskets 45 separating the process air flow from the regeneration air flow. In figure 2 the regeneration section 44 is indicated by reference "R" and the process air section is indicated by reference "P".

It will be appreciated that process air is the term used for the air to be dehumidified. The term "dry air" may be used for dehumidified process air, i.e. the air after being channelled through the rotor flutes. Regeneration air is the term for a heated air volume that is passed though the regeneration section 44 and which is used for the evaporation of the absorbed water in the rotor 41. The Regeneration air volume will normally be heated to a temperature required for the dehumidification process and as such contains a specific energy. It will thus be appreciated that this energy will be obtained on basis of a combination of regeneration air volume flow and regeneration air temperature.

In operation the rotor 41 rotates slowly and the adsorption agent therein will, when passing the process air section 43, be saturated with water molecules. When the rotor 41 is rotated over to the regeneration sector/zone 44, the absorbed water will evaporate by use of the heated regeneration air and the rotor 41 is thereby regenerated to once again absorb water molecules from the process air.

In a preferred embodiment of the invention the dehumidifier is configured with a regeneration air section 44 and a process air section 43 of substantially equal size and as such that each section will occupy 180° of the rotors total 360° circular surface. In particular cases, however, a subdivision with a process air section of 270° and a regeneration air section of 90° as indicated in figure 2 will apply or other combinations in between, e.g. 240°for process air and 120° for regeneration.

The subdivision in process air- and regeneration air sectors of 180°/180°respectively is particularly advantageous in situations where a high process air volume is discharged at a low temperature as this entails that this air volume may be channelled though the rotor 41 with a pressure loss and still be able to perform an effective regeneration of the adsorption agent of the rotor as the total energy recovered may be used for regeneration.

In other situations the subdivision in process air- and regeneration air sectors of 270°/90°, or 240°/120°, respectively will be particularly advantageous.

Reference is again made to Fig. 1. Between a fresh air coil 22 and the rotor 41 a temperature sensor 25 is installed for registering the regeneration air temperature of the regeneration air.

A regeneration air line 14 is configured for the transport of the regeneration air volume by use of a regeneration air fan 30 installed with a filter 14a, rotor 41 and regeneration air heater (s) 22, 23 on the suction side of the fan 30. The regeneration air fan 30 is coupled to a drive motor 31 equipped with means for regulating the regeneration air flow, which in a preferred embodiment of the invention is a frequency inverter (not shown) connected to the controller 100. Alternatively, a regulation damper (not shown) may be fitted to the regeneration air line 14 for the regulation of the regeneration air volume. In such cases the regulation damper will be configured with an actuator connected to the controller 100 as indicted by dashed line 31b.

The regeneration air is prior to being channelled through the rotor 41 heated by use of a twin coil heat exchanger 20 comprising a discharge coil 21 for extracting heat energy from warm process air discharged from the spray drying chamber 10 and transferred for heating the regeneration air by use of a regeneration air coil 22. Between the coils 21, 22 a circulation pump 24 is establishing a closed loop by use of pipes to ensure the circulation of liquid medium used for transferring the energy. The circulation pump 24 is connected to adequate means for controlling the liquid flow and will preferably be connected to the controller 100.

Normally the temperature of the process air discharged and the relative humidity of the discharge process air is set in relation to the actual drying process and the product to be spray dried. A discharge temperature in the range of 70 - 110 °C and a corresponding relative humidity of 4-10 % is often used as set point.

In addition an extra regeneration air heater 23 may be installed between the fresh air coil/regeneration air coil 22 and rotor 41 for the incidence that the regeneration air temperature needs to be raised to a temperature level which cannot be reached by use of the energy recovered from the heat recovery unit alone. This will normally only be relevant during the start-up phase of the spray drying apparatus where the temperature of the discharge air has not reached the operation level. The heater 23 is configured with a regulating means connected to the controller 100 for regulating the heating power of the heater 23. The heater 23 may be a steam or water operated heating coil or a gas heater for the direct- or indirect combustion of gas.

As described above, a regeneration air temperature sensor 25 is arranged between the regeneration air heater and the rotor 41. The regeneration air temperature sensor 25 is configured for measuring the regeneration air temperature and connected to the controller 100. In the preferred embodiment the regeneration temperature measuring means 25 is an electronic temperature transmitter.

In combination with the adjustment of the regeneration air temperature, and/or the regeneration air volume it may be preferred to control the rotations of the rotor 41 in view of the moisture content set point. For obtaining this the controller 100 is connected to a frequency inverter (not shown) which controls the speed of the motor 29.

Moreover, a regulation damper (not shown) may be fitted to the regeneration air line for the regulation of the regeneration air volume. Normally, the regulation damper will be configured with an actuator connected to the controller 100 for regulating the regeneration air flow. In the process air feed line between process air inlet 12 and the process air heater 17 a process air temperature measuring means 16 connected to the controller 100 is configured. Moreover a moisture content measuring means in the form of e.g. a humidity sensor 19 for determining the moisture content in the process air is installed in the process air inlet duct 15 and connected to the controller 100. The moisture content is measured as [g/kg] and determined on basis of a measured relative humidity and a corresponding temperature and as such the moisture content measuring means comprise a temperature sensor 18 and a humidity sensor 19.

As described in the foregoing, the controller 100 is connected to said regeneration air temperature sensor 25, the frequency inverter, the temperature sensor 18 and the humidity sensor 19, and process air temperature measuring means 16.

The controller 100 is configured for regulating the moisture content in the process air to be used in the spray drying chamber in view of a moisture content set point.

The moisture content is determined on basis of process air temperature readings received from the temperature sensor 18 and the relative humidity readings received from humidity sensor 19. These readings are compared to the moisture content set point (e.g. the dew point or water content, absolute or relatively) and the controller 100 regulates the regeneration air volume on basis of the comparison to obtain a measured value of the moisture content equal to the set point.

It will be appreciated that the regeneration air volume flow may be regulated within a minimum and a maximum limit. If in some incidences the moisture content set point cannot be obtained by regulating the regeneration air volume to the maximum limit, the controller 100 will further be sending signals to a regulation means (not shown) configured for regulating the heating power of the heater 23 to regulate the heating power supply to the heater 23. The readings of moisture content is compared with the moisture content set point and the controller regulates the heating power supply on basis of the comparison to obtain a measured value of the moisture content equal to the set moisture content point.

In case the measured moisture content is lower than the moisture content set point the provided regeneration energy will thus normally be reduced to a level where again the measured moisture content is equal to the moisture content set point.

Normally the temperature of the process air to be used in the spray drying chamber is highly related to the spray drying process and the product to be dried and as such a process air temperature set point will be appointed and given into the controller 100.

The readings of the process air temperature are compared with process air temperature set point and the controller regulates the heating power supply on basis of the comparison to obtain a measured value of the process air temperature equal to the set point.

In the below examples a comparison is made between the operation of a prior art spray drying apparatus and a spray drying apparatus according to the present invention. The example is given at ambient air moisture content of 22 g/kg [grams of water / kilo of dry air].

### Example 1:

| | |
|---|---|
| Ambient condition: | 30°C, 22 g/kg |
| Process air temp, inlet | 180°C |
| Moisture content, inlet | 22 g/kg |
| Process air temp, outlet | 80°C |
| Moisture content, outlet | 60 g/kg |
| | |
| Moisture removal capacity | 3830 kg/ hour |
| Production at 6000 operation hours | 22980 tons/year |
| | |
| Energy consumption: | |
| Process air heating | 4396 kW |
| Dehumidification | 0 kW |
| Total energy consumption | 4396 kW |

### Operation hours for 23000 ton/year 6005 hours/year

### Example 2:

| | |
|---|---|
| Ambient condition: | 30°C, 22 g/kg |
| Process air temp, inlet | 209°C |
| Moisture content, inlet | 10 g/kg |
| Process air temp, outlet | 80°C |
| Moisture content, outlet | 60 g/kg |
| | |
| Moisture removal capacity | 5045 kg/ hour |
| Production at 6000 operation hours | 30270 ton/year |

### Energy consumption:

| | |
|---|---|
| Process air heating | 3948 kW |
| Dehumidification | 1525 kW |
| Heat recovery | -622 kW |
| Total energy consumption | 4851 kW |

### Operation hours for 23000 ton/year 4559 hours/year

### Example 3:

| | |
|---|---|
| Ambient condition: | 30°C, 22 g/kg |
| Process air temp, inlet | 209°C |
| Moisture content, inlet | 10 g/kg |
| Process air temp, outlet | 80°C |
| Moisture content, outlet | 60 g/kg |
| | |
| Moisture removal capacity | 5050 kg/ hour |
| Production at 6000 operation hours | 30300 ton/year |
| | |
| Energy consumption: | |
| Process air heating | 4017 kW |
| Dehumidification | 1699 kW |
| Heat recovery | -1033 kW |
| Total energy consumption | 4683 kW |

### Operation hours for 23000 ton/year 4554 hours/year

The data related to a prior art spray drying apparatus is listed in Example 1. In examples 2 and 3 the data relating to a spray drying apparatus according to the present invention are listed. Whereas in example 2 the dehumidifier is configured with a regeneration section of 90° and a process air section of 270°, in example 3 the regeneration section and the process air section each occupy each 180° or the circular surface.

It has surprisingly been found that the production capacity is increased by 24% in terms of produced ton of product per year compared to the prior art spray drying apparatus. This is achieved by raising the temperature of the process air inlet temperature and reducing the moisture content of the process air at the same time by use of an adsorption dehumidifier. Even though the "process air, inlet" will be raised to a higher temperature it has been found that by recovering energy from the discharge process air the capacity of the system is increased and the process hence made more efficient over the systems of the prior art.

It will therefore be appreciated that in view of the actual moisture content the total energy consumption must be increased for the process air inlet temperature to reach the enthalpy working line applicable for the actual drying process. This increase in the total energy consumption is, however, compensated for as the vast majority of the energy used for the dehumidifying process is recovered from the hot process air discharged at the spray dryer chamber as described in the foregoing and listed in the examples. Moreover, the production capacity of the spray drying chamber has been increased as the process air holds low moisture content and, consequently, the same volume of process air is capable of absorbing more moisture and still the drying process operation is kept at the same enthalpy working line. In this context it will be appreciated that the production time used for the production of the 23000 ton as per the examples has been reduced decisively and as such same spray drying apparatus will be able to produce same volume of product, but at a lower cost per ton and in a shorter period of time, or increase the capacity of the spray drying apparatus to produce an increased volume at the same total cost.

The scope of the invention is not to be limited by the preferred embodiments disclosed herein, but as defined by the claims. The skilled person will be able to suggest modifications to the embodiments as other types of heat exchanging means may apply, as for instance cross flow heat exchanger. Thus it will be appreciated that other types of adsorption dehumidifiers will apply and as such a wet adsorption dehumidifier using a liquid adsorption agent may be implemented instead of dehumidifiers using adsorption rotors.

## Claims

1. A spray drying apparatus (1) comprising
- a spray dryer chamber (10) with
- a feed inlet device (11),
- a process air inlet (12) for feeding a process air volume to the spray dryer chamber (10) and
- a process air discharge (13),
- a process air inlet duct (15) for providing a process air volume to said process air inlet (12),
- an adsorption dehumidification device for dehumidification of the process air volume, said adsorption dehumidification device being provided in said process air inlet duct (15) and comprising
- an adsorption source,
- a process air section (43), and
- a regeneration air section (44),
- a process air heater (17) for heating a process air volume provided in said process air inlet duct (15) between the adsorption dehumidification device and said process air inlet (12),
- a process air temperature measuring means (16) provided in said process air inlet duct (15) between said process air heater (17) and said process air inlet (12)
- means (22, 23) for heating a regeneration air volume to a regeneration air temperature
- means for measuring the regeneration air temperature (25),
- a regeneration air fan (30) configured for transporting the regeneration air volume, and
- moisture content measuring means (18,19) for determining a moisture content in the process air,
**characterized in that** said spray drying apparatus (1) further comprises heat exchanging means (20) configured for exchanging heat energy from the process air volume discharged at the process air discharge (13) to a regeneration air volume for heating of said regeneration air volume.

2. A spray drying apparatus according to claim 1, **characterized in that** the heat exchanging means (20) configured for exchanging heat energy from the process air volume to the regeneration air volume comprises a discharge coil (21) provided between the process air discharge (13) and a process air fan (13a).

3. A spray drying apparatus according to claim 1 or 2, **characterized in that** the heat exchanging means (20) configured for exchanging heat energy from the process air volume to the regeneration air volume comprises a regeneration coil (22) provided in a regeneration-air line (14) to the adsorption dehumidification device.

4. A spray drying apparatus according to any one of claims 1-3, wherein a regeneration air heater (23) is provided between the regeneration air coil (22) and adsorption dehumidification device.

5. A spray drying apparatus according to any one of claims 1-4, **characterized in that** a controller (100) is configured for determining a moisture content on basis on readings from the moisture content measuring means (18, 19), the apparatus further comprising a connection for forwarding information to a means for regulating the regeneration energy on basis of a comparison to obtain a measured value of the moisture content equal to a moisture content set point.

6. A spray drying apparatus according to claim 5, **characterized in that,** the regeneration air fan (30) comprises a motor (31) being configured with control means connected to the controller (100) for regulating the air volume.

7. A spray drying apparatus according to any one of claims 1-6, **characterized in that,** said moisture content measuring means (18, 19) is configured for measuring the moisture content of the process air volume passing through said process air inlet duct (15), and **in that** the moisture content measuring means (18, 19) is provided after the adsorption dehumidification device in said process air inlet duct (15).

8. A Spray drying apparatus according to any one of claims 5-7, **characterized in that,** said adsorption source (41) is in form of a cylindrical adsorption rotor (41) and means for controlling the rotations of the rotor (41) is connected to the controller (100) to adjust the rotations of the rotor in view of the moisture content set point.

9. A spray drying apparatus according to any one of claims 1-8, **characterized in that,** said dehumidification device comprises a cylindrical rotor (41) having adsorptive properties configured with a plurality of flutes penetrating from a first cylinder end surface (41a) to a second cylinder end surface (41b) to thereby allow the passage of process air and regeneration air, and configured with rotation means (29) for controlling the rotational speed of said rotor (41).

10. A spray drying apparatus according to claim 9, **characterized in that,** the process air and regeneration air sections (43, 44) occupy 180°/180° of the rotors total 360° circular surface respectively.

11. A spray drying apparatus according to claim 9, **characterized in that,** the process air and regeneration air sections (43, 44) occupy 270°/90° of the rotors total 360° circular surface respectively.

12. A spray drying apparatus according to any one of the preceding claims, **characterized in that** the moisture content measuring means (18, 19) is placed between the adsorption source (41) and process air heater (17).

## Patentansprüche

1. Sprühtrocknervorrichtung (1), umfassend
- eine Sprühtrocknerkammer (10) mit
- einer Gutzuführungseinlassvorrichtung (11),
- einem Prozesslufteinlass (12) zum Zuführen einer Prozessluftmenge zu der Sprühtrocknerkammer (10) und
- einem Prozessluftauslass (13),
- einen Prozesslufteinlasskanal (15) zum Zuführen einer Prozessluftmenge zu dem Prozesslufteinlass (12),
- eine Adsorptionsentfeuchtungsvorrichtung zur Entfeuchtung der Prozessluftmenge, wobei die Adsorptionsentfeuchtungsvorrichtung in dem Prozesslufteinlasskanal (15) vorgesehen ist und
- eine Adsorptionsquelle,
- einen Prozessluftabschnitt (43) und
- einen Regenerationsluftabschnitt (44) umfasst,
- einen Prozesslufterhitzer (17) zum Erhitzen einer Prozessluftmenge, der in dem Prozesslufteinlasskanal (15) zwischen der Adsorptionsentfeuchtungsvorrichtung und dem Prozesslufteinlass (12) vorgesehen ist,
- ein Prozesslufttemperaturmessmittel (16), das in dem Prozesslufteinlasskanal (15) zwischen dem Prozesslufterhitzer (17) und dem Prozesslufteinlass (12) vorgesehen ist,
- Mittel (22, 23) zum Erhitzen einer Regenerationsluftmenge auf eine Regenerationslufttemperatur,
- ein Mittel zum Messen der Regenerationslufttemperatur (25),
- einen Regenerationsluftventilator (30), der zum Befördern der Regenerationsluftmenge ausgebildet ist, und
- Feuchtegehaltmessmittel (18, 19) zum Bestimmen eines Feuchtegehalts in der Prozessluft,
**dadurch gekennzeichnet, dass** die Sprühtrocknervorrichtung (1) ferner ein Wärmetauschmittel (20) umfasst, das zum Übertragen von Wärmeenergie von der Prozessluftmenge, die an dem Prozessluftauslass (13) abgeleitet wird, auf eine Regenerationsluftmenge zum Erhitzen der Regenerationsluftmenge ausgebildet ist.

2. Sprühtrocknervorrichtung nach Anspruch 1, **dadurch gekennzeichnet, dass** das Wärmetauschmittel (20), das zum Übertragen von Wärmeenergie von der Prozessluftmenge auf die Regenerationsluftmenge ausgebildet ist, eine Auslassschlange (21) umfasst, die zwischen dem Prozessluftauslass (13) und einem Prozessluftventilator (13a) vorgesehen ist.

3. Sprühtrocknervorrichtung nach Anspruch 1 oder 2, **dadurch gekennzeichnet, dass** das Wärmetauschmittel (20), das zum Übertragen von Wärmeenergie von der Prozessluftmenge auf die Regenerationsluftmenge ausgebildet ist, eine Regenerationsschlange (22) umfasst, die in einer Regenerationsluftleitung (14) zu der Adsorptionsentfeuchtungsvorrichtung vorgesehen ist.

4. Sprühtrocknervorrichtung nach einem beliebigen der Ansprüche 1-3, wobei ein Regenerationslufterhitzer (23) zwischen der Regenerationsluftschlange (22) und einer Adsorptionentfeuchtungsvorrichtung vorgesehen ist.

5. Sprühtrocknervorrichtung nach einem beliebigen der Ansprüche 1-4, **dadurch gekennzeichnet, dass** eine Steuerung (100) zum Bestimmen eines Feuchtegehalts auf der Grundlage von Messwerten von den Feuchtegehaltmessmitteln (18, 19) ausgebildet ist, wobei die Vorrichtung ferner eine Verbindung zum Weiterleiten von Informationen zu einem Mittel zum Regeln der Regenerationsenergie auf der Grundlage eines Vergleichs, um einen Messwert des Feuchtegehalts gleich einem Feuchtegehaltsollwert zu erhalten, umfasst.

6. Sprühtrocknervorrichtung nach Anspruch 5, **dadurch gekennzeichnet, dass** der Regenerationsluftventilator (30) einen Motor (31) umfasst, der mit Steuermitteln ausgebildet ist, die zum Regeln der Luftmenge mit der Steuerung (100) verbunden sind.

7. Sprühtrocknervorrichtung nach einem beliebigen der Ansprüche 1-6, **dadurch gekennzeichnet, dass** die Feuchtegehaltmessmittel (18, 19) zum Messen des Feuchtegehalts der Prozessluftmenge, die durch den Prozesslufteinlasskanal (15) tritt, ausgebildet sind, und dadurch, dass die Feuchtgehaltmessmittel (18, 19) in dem Prozesslufteinlasskanal (15) nach der Adsorptionsentfeuchtungsvorrichtung vorgesehen sind.

8. Sprühtrocknervorrichtung nach einem beliebigen der Ansprüche 5-7, **dadurch gekennzeichnet, dass** die Adsorptionsquelle (41) in Form eines zylindrischen Adsorptionsrotors (41) vorliegt und ein Mittel zum Steuern der Umdrehungen des Rotors (41) mit der Steuerung (100) verbunden ist, um die Umdrehungen des Rotors im Hinblick auf den Feuchtegehaltsollwert einzustellen.

9. Sprühtrocknervorrichtung nach einem beliebigen der Ansprüche 1-8, **dadurch gekennzeichnet, dass** die Entfeuchtungsvorrichtung einen zylindrischen Rotor (41) mit adsorptiven Eigenschaften umfasst, der mit mehreren Rillen ausgebildet ist, die von einer ersten Zylinderendoberfläche (41a) zu einer zweiten Zylinderendoberfläche (41b) hindurch führen, um dadurch das Durchtreten von Prozessluft und Regenerationsluft zu gestatten, und mit einem Rotationsmittel (29) zum Regeln der Drehzahl des Rotors (41) ausgebildet ist.

10. Sprühtrocknervorrichtung nach Anspruch 9, **dadurch gekennzeichnet, dass** der Prozessluft- und der Regenerationsluftabschnitt (43, 44) jeweils 180° der gesamten kreisförmigen Oberfläche des Rotors von 360° einnehmen.

11. Sprühtrocknervorrichtung nach Anspruch 9, **dadurch gekennzeichnet, dass** der Prozessluft- und der Regenerationsluftabschnitt (43, 44) 270° bzw. 90° der gesamten kreisförmigen Oberfläche des Rotors von 360° einnehmen.

12. Sprühtrocknervorrichtung nach einem beliebigen der vorhergehenden Ansprüche, **dadurch gekennzeichnet, dass** die Feuchtegehaltmessmittel (18, 19) zwischen der Adsorptionsquelle (41) und dem Prozesslufterhitzer (17) angeordnet sind.

## Revendications

1. Appareil de séchage par pulvérisation (1) comprenant
- une chambre de séchage par pulvérisation (10) comprenant
- un dispositif d'entrée d'alimentation (11),
- une entrée d'air de traitement (12) pour apporter de l'air de traitement dans la chambre de séchage par pulvérisation (10) et
- une décharge d'air de traitement (13),
- une conduite d'entrée d'air de traitement (15) pour apporter un volume d'air de traitement à ladite entrée d'air de traitement (12),
- un dispositif de déshumidification à adsorption pour déshumidifier le volume d'air de traitement, ledit dispositif de déshumidification à adsorption étant prévu dans ladite conduite d'entrée d'air de traitement (15) et comprenant
- une source d'adsorption,
- une section d'air de traitement (43), et
- une section de régénération d'air (44),
- un réchauffeur d'air de traitement (17) pour chauffer un volume d'air de traitement prévu dans ladite conduite d'entrée d'air de traitement (15) entre le dispositif de déshumidification à adsorption et ladite entrée d'air de traitement (12),
- un moyen de mesure de température d'air de traitement (16) prévu dans ladite conduite d'entrée d'air de traitement (15) entre ledit réchauffeur d'air de traitement (17) et ladite entrée d'air de traitement (12),
- un moyen (22, 23) de chauffage d'un volume d'air de régénération à une température d'air de régénération,
- un moyen de mesure de température d'air de régénération (25),
- un ventilateur à air de régénération (30) conçu pour charrier le volume d'air de régénération et
- un moyen de mesure de la teneur en humidité (18, 19) pour déterminer une teneur en humidité de l'air de traitement,
**caractérisé en ce que** ledit appareil de séchage par pulvérisation (1) comprend en outre un moyen d'échange de chaleur (20) conçu pour échanger l'énergie thermique du volume d'air de traitement déchargé au niveau de la décharge d'air de traitement (13) pour obtenir un volume d'air de régénération pour chauffer ledit volume d'air de régénération.

2. Appareil de séchage par pulvérisation selon la revendication 1, **caractérisé en ce que** le moyen d'échange de chaleur (20) conçu pour échanger l'énergie thermique du volume d'air de traitement pour obtenir le volume d'air de régénération comprend une boucle de décharge (21) prévue entre la décharge d'air de traitement (13) et un ventilateur à air de traitement (13a).

3. Appareil de séchage par pulvérisation selon la revendication 1 ou 2, **caractérisé en ce que** le moyen d'échange de chaleur (20) conçu pour échanger l'énergie thermique du volume d'air de traitement pour obtenir le volume d'air de régénération comprend une boucle de régénération (22) prévue dans une ligne d'air de régénération (14) pour le dispositif de déshumidification à adsorption.

4. Appareil de séchage par pulvérisation selon l'une quelconque des revendication 1-3, dans lequel un réchauffeur d'air de régénération (23) est prévu entre la boucle d'air de régénération (22) et le dispositif de déshumidification à adsorption.

5. Appareil de séchage par pulvérisation selon l'une quelconque des revendications 1-4, **caractérisé en ce qu**'un contrôleur (100) est conçu pour déterminer une teneur en humidité à partir de relevés du moyen de mesure de teneur en humidité (18, 19), cet appareil comprenant en outre une connexion pour envoyer des informations à un moyen de régulation de l'énergie de régénération à partir d'une comparaison en vue d'obtenir une valeur mesurée de la teneur en humidité égale à un point de fixation de la teneur en humidité.

6. Appareil de séchage par pulvérisation selon la revendication 5, **caractérisé en ce que** le ventilateur à air de régénération (30) comprend un moteur (31) conçu avec un moyen de commande connecté au contrôleur (100) pour réguler le volume d'air.

7. Appareil de séchage par pulvérisation selon l'une quelconque des revendications 1-6, **caractérisé en ce que** ledit moyen de mesure de teneur en humidité (18, 19) est conçu pour mesurer la teneur en humidité du volume d'air de traitement passant dans ladite conduite d'entrée d'air de traitement (15) et **en ce que** le moyen de mesure de teneur en humidité (18, 19) est prévu en aval du dispositif de déshumidification à adsorption dans ladite conduite d'entrée d'air de traitement (15).

8. Appareil de séchage par pulvérisation selon l'une quelconque des revendications 5-7, **caractérisé en ce que** ladite source d'adsorption (41) se présente sous forme d'un rotor d'adsorption cylindrique (41) et qu'un moyen pour contrôler les rotations du rotor (41) est connecté au contrôleur (100) pour ajuster les rotations du rotor en vue du point de fixation de la teneur en humidité.

9. Appareil de séchage par pulvérisation selon l'une quelconque des revendications 1-8, **caractérisé en ce que** ledit dispositif de déshumidification comprend un rotor cylindrique (41) ayant des propriétés adsorbantes et conçu avec une pluralité de cannelures pénétrant depuis une première surface terminale du cylindre (41a) jusqu'à une seconde surface terminale du cylindre (41b) pour permettre ainsi le passage d'air de traitement et d'air de régénération et conçu avec des moyens de rotation (29) pour contrôler la vitesse de rotation dudit rotor (41).

10. Appareil de séchage par pulvérisation selon la revendication 9, **caractérisé en ce que** les sections d'air de traitement et d'air de régénération (43, 44) occupent respectivement 180°/180° de la surface circulaire totale de 360° du rotor.

11. Appareil de séchage par pulvérisation selon la revendication 9, **caractérisé en ce que** les sections d'air de traitement et d'air de régénération (43, 44) occupent respectivement 270°/90° de la surface circulaire totale de 360° du rotor.

12. Appareil de séchage par pulvérisation selon l'une quelconque des revendications précédentes, **caractérisé en ce que** le moyen de mesure de teneur en humidité (18, 19) est placé entre la source d'adsorption (41) et le réchauffeur d'air de traitement (17).
